# EUROPÄISCHE PATENTANMELDUNG

(11) **EP 0 949 773 A2**
(43) Veröffentlichungstag der Anmeldung: **13.10.1999**
(21) Anmeldenummer: 99440063.8
(22) Anmeldetag: 26.03.1999
(51) Int. Cl.: H04J 3/04, H04M 9/08, G06F 12/00, G06F 5/00

(54) **Elektronische Schaltung zur Mehrkanalverarbeitung von Grundfunktionen**

(30) Priorität: 09.04.1998 DE 19815961
(71) Anmelder: ALCATEL, 75008 Paris (FR)
(72) Erfinder: Mann, Armin, 70197 Stuttgart (DE); Matt, Hans Jürgen, Dr., 71686 Remseck (DE); Söhnle, Holger, 71299 Wimsheim (DE); Walker, Michael, 73666 Baltmannsweiler 2 (DE); Weinschenk, Fritz, 73773 Aichwald (DE)
(74) Vertreter: Müller, Joachim, Dipl.-Ing.

(57) **Zusammenfassung**

Eine elektronische Schaltung zur Bereitstellung einer Grundfunktion im Bereich der elektronischen Signalverarbeitung, insbesondere der Telekommunikationstechnik, wie beispielsweise einer Freisprech-, Geräuschunterdrückungs-, Echounterdrückungs- oder Signalfilterungsfunktion, mit mindestens einer Speichereinheit zur Zwischenspeicherung von Abtastwerten, ist dadurch gekennzeichnet, daß die Speichereinheit zur simultanen Bedienung von bis zu N eingehenden und ausgehenden Kommunikationskanälen N parallel geschaltete Speicherzellen (25₁, 25₂,..., 25_{N}) entsprechend den N Kommunikationskanälen umfaßt, und daß der Speichereinheit eingangsseitig ein Multiplexer (21) vorgeschaltet und ausgangsseitig ein Demultiplexer (22) nachgeschaltet ist. Dadurch wird mit einem geringen technischen Aufwand eine Einkanal-Schaltung dahingehend weitergebildet, daß sie eine Anzahl N Kommunikationskanäle gleichzeitig mit der Grundfunktion versorgen kann.

## Beschreibung

Die Erfindung betrifft eine elektronische Schaltung zur Bereitstellung einer Grundfunktion im Bereich der elektronischen Signalverarbeitung, insbesondere der Telekommunikationstechnik, wie beispielsweise einer Freisprech-, Geräuschunterdrückungs-, Echounterdrückungs- oder Signalfilterungsfunktion, mit mindestens einer Speichereinheit zur Zwischenspeicherung von Abtastwerten.

Derartige elektronische Schaltungen zur Bereitstellung von Grundfunktionen sind in vielfältigen Variationen bekannt und auf dem Markt erhältlich. In der Telekommunikationstechnik sind Grundfunktionen wie Freisprechen, Geräuschunterdrückung, Echounterdrückung oder Signalfilterung als fester Bestandteil in Endgeräten oder Telekommunikationsanlagen eingebaut.

Eine solche Schaltung benötigt mindestens eine, in der Regel mehrere Speichereinheiten zur Zwischenspeicherung von Abtastwerten. Auch derartige Speichereinheiten sind in unterschiedlicher Ausformung bekannt, beispielsweise in Form eines sogenannten RAM-Speichers (random access memory). Bekannte RAM-Speichereinheiten können auch mehrere Speicherzellen umfassen, die im Multiplexbetrieb beschrieben und ausgelesen werden können.

Nachteilig bei diesen bekannten elektronischen Schaltungen zur Bereitstellung einer Grundfunktion ist die Tatsache, daß mit einer solchen Schaltung jeweils immer nur ein einziger Telekommunikationskanal bedient werden kann.

Aufgabe der vorliegenden Erfindung ist es demgegenüber, mit einem möglichst geringen technischen Aufwand eine elektronische Schaltung der eingangs beschriebenen Art dahingehend weiterzubilden, daß sie eine Anzahl N Kommunikationskanäle gleichzeitig mit der Grundfunktion versorgen kann.

Erfindungsgemäß wird diese Aufgabe auf ebenso überraschend einfache wie wirkungsvolle Art und Weise dadurch gelöst, daß die Speichereinheit zur simultanen Bedienung von bis zu N eingehenden und ausgehenden Kommunikationskanälen N parallel geschaltete Speicherzellen entsprechend den N Kommunikationskanälen umfaßt, und daß der Speichereinheit eingangsseitig ein Multiplexer vorgeschaltet und ausgangsseitig ein Demultiplexer nachgeschaltet ist.

Auf diese Weise kann eine bekannte Einkanalschaltung unter Zuhilfenahme bekannter und preiswert als Massenware erhältlicher elektronischer Bauteile für den Mehrkanalbetrieb verwendet werden. Dazu müssen lediglich sämtliche in Einkanalschaltungen vorhandenen Einzelspeicher durch die oben beschriebenen N parallel geschalteten Speicherzellen mit vorgeschaltetem Multiplexer und nachgeschaltetem Demultiplexer ersetzt werden.

Bei einer besonders bevorzugten Ausführungsform der erfindungsgemäßen Schaltung enthalten die Speicherzellen als Basiselemente an sich bekannte Master-Slave-Flipflops zur Zwischenspeicherung eines binären Werts. Üblicherweise gespeicherte Abtastwerte umfassen in der Regel zwischen 8 und 24 bit, meist 16 bit. Durch die Verwendung von Master-Slave-Flipflops zur Zwischenspeicherung jeweils eines binären Werts wird in einem einzigen Taktzyklus ein gleichzeitiges Auslesen und Beschreiben der Speicherzellen ermöglicht.

Bevorzugt ist auch eine Ausführungsform der erfindungsgemäßen Schaltung, bei der ein Modulo-N-Zähler vorgesehen ist, der über einen Adressbus die Speicherzellen so ansteuern kann, daß immer die gleiche, einem bestimmten Kommunikationskanal i zugeordnete Speicherzelle i zur Zwischenspeicherung und zum Abruf von Abtastwerten dieses bestimmten Kommunikationskanals i addressiert wird, wobei 1 ≤ i ≤ N ist. Damit können auf technisch sehr unaufwendige Weise bei einer heutzutage unproblematischen Taktrate von beispielsweise 60 MHz gleichzeitig ca. 2000 Kommunikationskanäle mit einer Grundfunktion in einer einzigen, äußerst kompakten Schaltung bedient werden.

Die erfindungsgemäße Schaltung kann auf einem sogenannten ASIC (Application Specific Integrated Circuit) implementiert sein, durch dessen hohe Integrationsdichte trotz gleichzeitiger Bedienung einer großen Anzahl von Kommunikationskanälen mit der entsprechenden Grundfunktion die Baugröße der gesamten Schaltungsanordnung relativ klein gehalten werden kann. Die Speichereinheiten selbst können getrennt vom ASIC auf einem externen RAM realisiert sein. Dadurch können die für das ASIC erforderliche Chipfläche und somit die Gestehungskosten des ASIC minimal gehalten werden.

Bevorzugt ist ein Verfahren zum Betrieb einer erfindungsgemäßen elektronischen Mehrkanal-Schaltung, bei dem die Schaltung im Zeitmultiplex für N Kommunikations-Kanäle mit einer gegenüber einer entsprechenden Einkanal-Schaltung N-fach erhöhten Taktrate betrieben wird.

Verwendungen für die erfindungsgemäße elektronische Mehrkanal-Schaltung sind überall da denkbar, wo im Bereich der elektronischen Signalverarbeitung anstelle von einem Einkanal ein Mehrkanalbetrieb benötigt wird. Dazu kann jeweils die bereits vorhandene Technologie im Sinne der oben beschriebenen Erfindung modifiziert bzw. ersetzt werden. Die konkreten Schaltungen können dabei im Einzelfall jeweils völlig unterschiedlich aufgebaut sein, wobei aber prinzipiell immer die Merkmalskombination des Patentanspruchs 1 verwirklicht wird.

Bevorzugt ist die Verwendung der erfindungsgemäßen elektronsichen Schaltung in einem Compander zur Echounterdrückung in Telekommunikationseinrichtungen. Eine solche Companderschaltung kann neben akustischen Echos bei Freisprecheinrichtungen auch zur Unterdrückung von Hintergrundgeräuschen eingesetzt werden. Ferner ist sie geeignet, Leitungsechos und Geräusche zu reduzieren, die in Nachrichtennetzen beim Zusammenschalten von 2-Draht- und 4-Draht-Verbindungen entstehen können.

Eine weitere bevorzugte Verwendung sind die an sich bekannten Goertzelfilter. Ein Goertzelfilter entspricht einem bzw. mehreren digitalen Schwingkreisen zur Detektion von verschiedenen Sinustönen in einem Frequenzgemisch. Es wird beispielsweise in digitalen Telefonapparaten verwendet, um die per Mehrfrequenzverfahren (MFV) übermittelten Wählzeichen (2 aus 5 Tönen) zu detektieren und zu erkennen. Es wird ferner verwendet, um den Fax- oder Modembetrieb anhand des üblicherweise verwendeten 2100 Hz-Tones zu erkennen.

Vorteilhaft kann die erfindungsgemäße Schaltung auch in einem FIR (Finite Impulse Response)-Filter verwendet werden. FIR-Filter sind digitale Filter, die die von einem Kommunikationskanal kommenden Abtastwerte (mit beispielsweise 16 bit pro Abtastwert) in einem Schieberegister zwischenspeichern, wobei jeder Abtastwert mit einem Koeffizienten bewertet (in der Regel multipliziert) zu einem Summierer gegeben wird. Am Ausgang des Summierers steht das gefilterte Signal zur Verfügung.

Vorteilhaft ist auch die Verwendung der erfindungsgemäßen Schaltung in einem IIR (Infinite Impulse Response)-Filter. IIR-Filter sind digitale Filter, die ebenfalls eine fortlaufende Menge von Abtastwerten zwischenspeichern, wobei mindestens eine Verknüpfung (bewertete und addierte Abtastwerte) von Abtastwerten in einen vorausgehenden Speicher von Abtastwerten zurückgekoppelt wird.

Die gleichzeitige Bearbeitung von mehreren Signalen für N Kanäle im Zeitmultiplexbetrieb ist mit der erfindungsgemäßen Schaltung vorteilhaft auch in einer Vektorquantisierungseinrichtung, insbesondere einem Analog-Digital-Wandler oder einem Digital-Analog-Wandler möglich. Vektorquantisierer sind Schaltungen, die passend zu einer Eingangsfolge von N Abtastwerten, d.h. zu einem Vektor der Länge N, in einem Codebuch einen Vektor suchen, der dem Eingangsvektor möglichst ähnlich ist. Dieser Vektor wird dann als Repräsentant für das Eingangssignal weiterverwendet. Dafür muß ein Ähnlichkeitsmaß definiert sein, mit dessen Hilfe die Ähnlichkeit der beiden zu vergleichenden Vektoren bestimmt werden kann. Alle modernen Sprachkodierer für niedrige bit-Raten verwenden einen oder mehrere Vektorquantisierer. Zur Datenkompression muß sodann nicht mehr der Eingangsvektor selbst, sondern nur noch die Codebuchadresse eines Repräsentanten ermittelt und übertragen werden.

Zur gleichzeitigen Erzeugung mehrerer Signale für ein N-Kanal-System im Zeitmultiplexbetrieb kann die erfindungsgemäße elektronische Schaltung auch in einem Signalgenerator verwendet werden. Derartige Signalgeneratoren können für Meßzwecke, Systemsimulationen und Signalisierungen (beispielsweise Fax-, Modem-Betrieb etc.) aller Art üblicherweise verwendete spezielle Signale erzeugen. Die Signalgeneratoren arbeiten heutzutage vielfach digital und generieren z.B. sinusförmige, dreieckförmige, sägezahnförmige, pulsförmige oder anders geartete Signale, insbesondere auch Rauschsignale. Für alle diese Generatorfunktionen sind jeweils spezielle Schaltungen erhältlich, die in der erfindungsgemäßen Weise für den Mehrkanal-Betrieb modifiziert werden können.

Die erfindungsgemäße elektronische Schaltung kann vorteilhaft auch in einem Umkodierer, insbesondere einem gleichförmigen PCM-Kodierer, einem A-law-Kodierer oder einem µ -law-Kodierer verwendet werden.

Umcodierer werden zur Darstellung von Signalen in verschiedenen Standards verwendet. So können Abtastwerte eines Sprachsignals z.B. gemäß dem Telefonstandard ITU-T G.703 in Form von logarithmisch quantisierten Werten, auch als Puls-Code-Modulation, kurz PCM bezeichnet, mit je 8 bit/Abtastwert vorliegen, in einer anderen Anwendung gleichförmig quantisiert in Form von 16 bit/Abtastwert, usw.. Die in den USA und Europa üblichen PCM-Darstellungen für den Telefonkanal mit 8 bit Abtastwerten haben leichte Unterschiede bzgl. der Kennlinie, welhalb in einem Fall von "A-law-Codierung" und im anderen Fall von "µ-law-Codierung" die Rede ist.

Es gibt zahlreiche Verfahren der Quellencodierung bzw. der Kanalcodierung. Die Quellencodierung hat zum Ziel, die Informationen einer Quelle mit möglichst geringem Aufwand und möglichst wenig Qualitätsverlust an die Bitrate eines Übertragungskanals anzupassen. Die Verfahren sind meist recht komplex. In verschiedenen Anwendungen werden z.B. die differentielle PCM-Codierung (DPCM) (Codierung von Differenzwerten benachbarter Abtstwerte), ihre einfachste Variante die Delta-Modulation, bzw. ihre komplizierte Variante die adaptive DPCM, eingesetzt.

Neuere Verfahren für die Sprachcodierung im Mobilfunk verwenden Filtermodelle für die menschliche Spracherzeugung, um eine noch brauchbare Sprachqualität bei sehr niedrigen Bitraten (< 12 kbit/s) zu gewinnen. Die Stimmbänder werden dabei durch sogenannte Anregungsvektoren simuliert, der Rachen- und der Mund-Raum durch hintereinander geschaltete Filter. Dementsprechend werden diese Verfahren mi einem CELP (Code Excited Linear Predictive)-Coder/Decoder oder einem RELP (Residual Excited Linear Predictive)-Coder/Decoder durchgeführt. Die Kanalcodierung hat zum Ziel, die quellencodierten Informationen mit möglichst geringem Aufwand fehlerfrei zum Empfangsort zu übertragen.

Dazu generiert sie aus den Quellenzeichen sogenannte Prüfzeichen, die zusätzlich übertragen werden und am Empfangsort eine Rekonstruktion der gestörten Signale ermöglichen.

Bevorzugt ist auch die Verwendung der erfindungsgemäßen elektronischen Schaltung in einem Quellcodec, insbesondere in einem A-Modulator/Demodulator, PCM-Wandler, differentiellen PCM-Wandler, adaptiven differentiellen PCM-Wandler (ADPCM), einer GSM-Sprachkodiereinheit, einer CELP- oder einer RELP-Kodierungseinheit.

Vorteilhaft ist auch die Verwendung der erfindungsgemäßen Schaltung in einer Transformationseinrichtung. Transformationseinrichtungen dienen dazu, ein Zeitsignal (z.B. Sprache oder abgetastetes Bild) vom Zeitbereich in einen anderen Bereich, den sogenannten Bildbereich, beispielsweise Frequenzbereich, zu transformieren. Heute werden üblicherweise mit Hilfe der Fast-Fourier Transformation die Signale in den Frequenzbereich transformiert, um dort weiter verarbeitet zu werden. Zu den Transformationsvorschriften gehören üblicherweise Rücktransformationsvorschriften, auch Inverse Transformation genannt, mit denen das bearbeitete Signal in den Zeitbereich zurücktransformiert werden kann. Außer der Fourier Transformation gibt es noch zahlreiche andere Transformationen (Hadamard, Walsh, Cosinus, Wavelet, usw.), die im Bildbereich jeweils andere Eigenschaften haben, die für eine Anwendung vorteilhaft sein können.

Als weiteres vorteilhaftes Anwendungsbeispiel der erfindungsgemäßen elektronischen Schaltung sei schließlich der Einsatz in einer LPC (Linear Predictive Coding)-Struktur, insbesondere zur Sprachdigitalisierung im Mobilfunk, genannt.

Linear Predictive Coding ist ein Begriff aus der Sprachcodierung. Dabei werden zu einem Sprachsegment von ca. 20 ms Dauer die LPC-Filterkoeffizienten bestimmt, die die momentane Filtereigenschaft des Rachen- bzw. des Mund-Raumes beschreiben.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. Es zeigen:
- Fig. 1: die Realisierung einer Ausführungsform der erfindungsgemäßen elektronischen Schaltung als Compander zur Echounterdrückung in einem Funktionsschema und
- Fig. 2: den prinzipiellen Aufbau einer modifizierten Speichereinheit in einer erfindungsgemäßen elektronischen Schaltung .

Eine Compander-Schaltung zur Maskierung von Leitungsechos, die in Sprachpausen beim aussendenden Teilnehmer einlaufen, ist für den Einzelkanalbetrieb im Stand der Technik bereits bekannt. Auf einem Sendepfad x₁ → y₂ liegt ein von einem nahen TK-Teilnehmer zu einem fernen TK-Teilnehmer ausgesendetes Sendesignal an, von dem im Übertragungssystem reflektierte, möglicherweise aus mehreren Teilechos bestehende ferne Echos in einem Empfangspfad x₂ → y₁ zum nahen TK-Teilnehmer zurückgelangen können. Um diese Echos zu unterdrücken, wird an einem Eingang x'₁ des Companders 10 das Sendesignal im Sendepfad x₁ → y₂ abgegriffen und einer Estimator-Schaltung zugeführt, die über einen weiteren Eingang x'₂ des Companders 10 das vom fernen TK-Teilnehmer über den Empfangspfad x₂ → y₁ kommende Empfangssignal zᵢₙ (k), welches mit Echos belastet sein kann, eingespeist bekommt.

In der Estimator-Schaltung werden Echokopplung und Verzögerungszeiten der Echos sowie deren Empfangspegel und mögliche Hintergrundgeräusche berechnet und über einen Steuersignalpfad entsprechende Anweisungen an eine Kennlinienschaltung weitergereicht, die eine entsprechende Kennlinie bereitstellt und damit über ein Multiplizierglied das kurzzeitige Ausgangssignal zₒᵤₜ (k) in Abhängkeit vom kurzzeitigen Eingangssignal zᵢₙ (k) des echobelasteten Nutzsignals auf dem Empfangspfad x₂ → y₁ derart steuert, daß in Sprachpausen des fernen Sprechers der Signalpegel gesenkt und während der Sprechzeiten angehoben wird, um eventuelle Echos auf dem Nutzsignal während der Sprachpausen, wo sie vom nahen TK-Teilnehmer wahrgenommen werden könnten, zu unterdrücken. Das entsprechend behandelte Ausgangssignal wird dann an einem Ausgang y'₁ an den nahen TK-Teilnehmer weitergereicht.

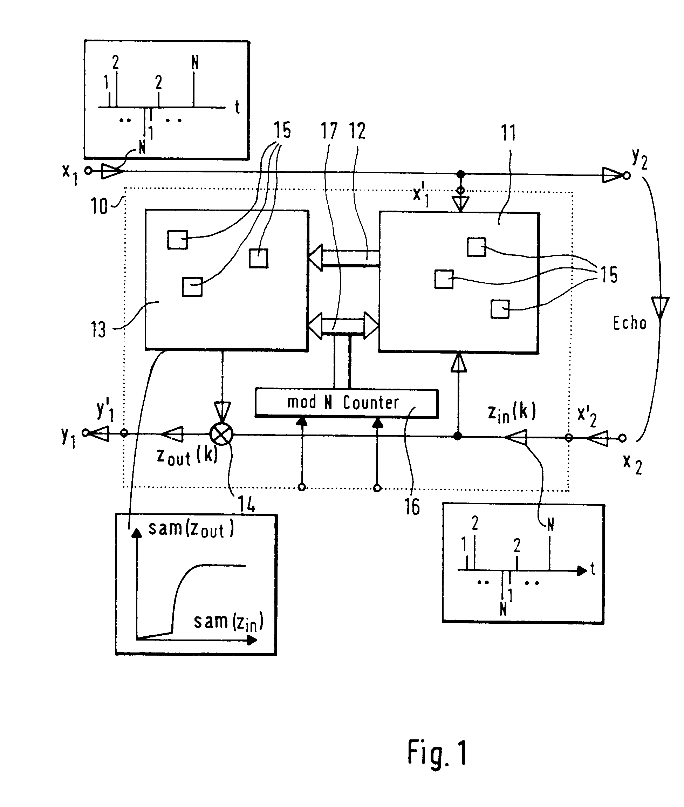

Eine schematische Darstellung einer Ausführungsform der erfindungsgemäßen elektronischen Mehrkanal-Schaltung als Compander-Schaltung 10 für die gleichzeitige Bedienung von N TK-Kanälen mit einer Echounterdrückungsfunktion ist in Fig. 1 gezeigt. Auf dem Sendepfad x₁ → y₂ liegt nun eine Vielzahl von Signalen der Kanäle 1 bis N an, was in Fig. 1 im Kästchen oben links als zeitlicher Verlauf der unterschiedlichen Abtastwerte der Signale der N TK-Kanälen dargestellt ist. Diese Abtastwerte werden gegenüber der bekannten Einkanal-Companderschaltung nunmehr im Zeitmultiplex mit N-facher Taktgeschwindigkeit über den Eingang x'₁ eingegeben. Das gleiche gilt auch für den Empfangspfad x₂ → y₁, wo ebenfalls mit N-facher Geschwindigkeit gegenüber einer Einkanal-Compander-Schaltung die entsprechend in einem weiteren Kästchen in Fig. 1 unten rechts schematisch dargestellten Abtastwerte der Empfangssignale aus den eingehenden Nutzkanälen in den Eingang x'₂ eingegeben werden.

Über die Eingänge x'₁ und x'₂ wird die Estimator-Schaltung 11 N-fach getaktet mit den entsprechenden Abtastwerten versorgt, aus denen sie wiederum die Echokopplungen und Verzögerungszeiten abschätzt und entsprechende Steuersignale über eine Steuerleitung 12 an die KennlinienSchaltung 13 weitergibt. Diese wiederum stellt die entsprechenden Kennlinien zur Verfügung, welche einem Multiplizierglied 14 eingegeben werden, um das kurzzeitige Ausgangssignal zₒᵤₜ (k) des Nutzsignals auf dem k-ten TK-Kanal in Abhängigkeit vom kurzzeitigen Eingangssignal zᵢₙ (k) zum Zwecke der Echounterdrückung zu steuern.

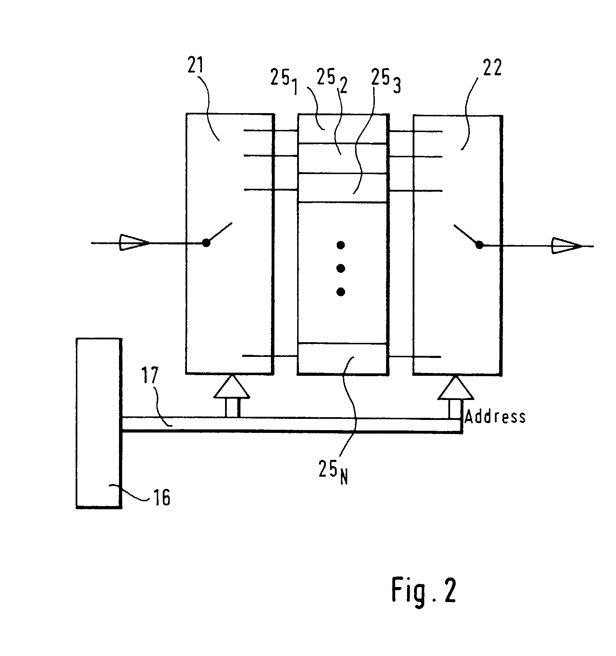

Sämtliche Speichereinheiten innerhalb der erfindungsgemäß modifizierten Compander-Schaltung 10 sind nunmehr als Multiplexer-Zwischenspeicher-Demultiplexer (MZD)-Einheiten 15 ausgeführt, die pauschal mit gleichen Bezugsziffern bezeichnet sind und anhand von Fig. 2 unten näher erläutert werden. Weiterhin ist in der Vielkanal-Compander-Schaltung 10 ein modulo-N-Zähler 16 vorgesehen, der über einen Adressbus 17 die MZD-Einheiten 15 in der Estimator-Schaltung 1 und in der Kennlinien-Schaltung 13 so ansteuert, daß in jeder MZD-Einheit 15 immer die gleiche, einem bestimmten, im gezeigten Beispiel dem k-ten, TK-Kanal zugeordnete Speicherzelle adressiert wird.

Links unten in Fig. 1 ist schematisch eine typische Compander-Kennlinie gezeigt, mit der das kurzzeitige Ausgangssignal zₒᵤₜ (k) in Abhängigkeit vom kurzzeitigen Eingangssignal zᵢₙ(k) gesteuert wird. Die entsprechend behandelten Signale der N TK-Kanäle werden mit N-facher Taktgeschwindigkeit gegenüber einer Einzelkanal-Compander-Schaltung am Ausgang y'₁ der erfindungsgemäßen Vielkanal-Compander-Schaltung 10 auf den Empfangspfad zu einer Vielzahl naher TK-Teilnehmer ausgegeben.

Fig. 2 zeigt schematisch den Aufbau einer über den Adressbus 17 vom modulo-N-Zähler 16 angesteuerten MZD-Einheit 15 aus Fig. 1. Entsprechend der Anzahl von TK-Kanälen sind N parallel geschaltete Speicherzellen 25₁, 25₂, ... 25_{N} vorgesehen, die je einen Abtastwert mit beispielsweise 16 bit speichern und die über einen Multiplexer 21 angesteuert und deren Inhalt von einem Demultiplexer 22 weitergeleitet werden. Die Speicherzellen können als Basiselemente insbesondere sogenannte Master-Slave-Flipflops zur Zwischenspeicherung jeweils eines binären Wertes enthalten.

Insgesamt kann die erfindungsgemäße Compander-Schaltung 10 auf einem ASIC implementiert sein. Die MZD-Einheiten können bei in der Zeichnung nicht dargestellten Ausführungsformen auch auf einer externen, von ASIC getrennten Speichereinheit, vorzugsweise einem RAM realisiert sein.

## Patentansprüche

1. Elektronische Schaltung zur Bereitstellung einer Grundfunktion im Bereich der elektronischen Signalverarbeitung, insbesondere der Telekommunikationstechnik, wie beispielsweise einer Freisprech-, Geräuschunterdrückungs-, Echounterdrückungs- oder Signalfilterungsfunktion, mit mindestens einer Speichereinheit zur Zwischenspeicherung von Abtastwerten,
**dadurch gekennzeichnet,**
daß die Speichereinheit (15) zur simultanen Bedienung von bis zu N eingehenden und ausgehenden Kommunikationskanälen N parallel geschaltete Speicherzellen (25₁, 25₂,..., 25_{N}) entsprechend den N Kommunikationskanälen umfaßt, und daß der Speichereinheit (15) eingangsseitig ein Multiplexer (21) vorgeschaltet und ausgangsseitig ein Demultiplexer (22) nachgeschaltet ist.

2. Schaltung nach Anspruch 1, dadurch gekennzeichnet, daß die Speicherzellen (25₁, 25₂,..., 25_{N}) als Basiselemente Master-Slave-Flipflops zur Zwischenspeicherung eines binären Wertes enthalten.

3. Schaltung nach Anspruch 1 oder 2, dadurch gekennzeichnet, daß ein Modulo-N-Zähler (16) vorgesehen ist, der über einen Adressbus (17) die Speicherzellen (25₁, 25₂..., 25_{N}) so ansteuern kann, daß immer die gleiche, einem bestimmten Kommunikationskanal zugeordnete Speicherzelle zur Zwischenspeicherung und zum Abruf von Abtastwerten dieses bestimmten Kommunikationskanals addressiert wird.

4. Verwendung einer elektronischen Schaltung nach einem der Ansprüche 1 bis 3 in einem Compander (10) zur Echounterdrückung in Telekommunikationseinrichtungen.

5. Verwendung einer elektronischen Schaltung nach einem der Ansprüche 1 bis 3 in einem Goertzel-Filter.

6. Verwendung einer elektronischen Schaltung nach einem der Ansprüche 1 bis 3 in einem FIR (Finite Impulse Response)-Filter.

7. Verwendung einer elektronischen Schaltung nach einem der Ansprüche 1 bis 3 in einem Quellcodec, insbesondere in einem Δ-Modulator/Demodulator, PCM-Wandler, differentiellen PCM-Wandler (DPCM), adaptiven differentiellen PCM-Wandler (ADPCM), einer GSM-Einheit, einer CELP (Code Excited Linear Predictive)- oder einer RELP (Residual Excited Linear Predictive)-Kodierungseinheit.

8. Verwendung einer elektronischen Schaltung nach einem der Ansprüche 1 bis 3 in einer Transformationseinrichtung, insbesondere für FFT (Fast Fourier Transform), Walsh-, Hadamard-, Cosinus- und deren inverse Transformationen.

9. Verwendung einer elektronischen Schaltung nach einem der Ansprüche 1 bis 3 in einer LPC (Linear Predictive Coding)-Struktur, insbesondere zur Sprachdigitalisierung im Mobilfunk.

10. Verfahren zum Betrieb einer elektronischen Schaltung nach einem der Ansprüche 1 bis 3, dadurch gekennzeichnet, daß die Schaltung im Zeitmultiplex für N Kommunikations-Kanäle mit einer gegenüber einer entsprechenden Einzelkanal-Schaltung N-fach erhöhten Taktrate betrieben wird.
